(19) Europäisches Patentamt / European Patent Office / Office européen des brevets

(11) **EP 3 730 645 B1**

(12) **EUROPEAN PATENT SPECIFICATION**

(45) Date of publication and mention of the grant of the patent:
**02.08.2023 Bulletin 2023/31**

(21) Application number: **18893177.8**

(22) Date of filing: **23.11.2018**

(51) International Patent Classification (IPC):
$C22C\ 38/12^{(2006.01)}$    $C23C\ 2/02^{(2006.01)}$
$C23C\ 2/06^{(2006.01)}$    $C22C\ 38/04^{(2006.01)}$
$C21D\ 9/46^{(2006.01)}$    $C21D\ 8/02^{(2006.01)}$
$C22C\ 38/00^{(2006.01)}$    $C22C\ 38/02^{(2006.01)}$
$C22C\ 38/06^{(2006.01)}$    $C21D\ 8/04^{(2006.01)}$
$B32B\ 15/01^{(2006.01)}$

(52) Cooperative Patent Classification (CPC):
**C22C 38/001; B32B 15/013; C21D 8/0426; C21D 8/0436; C21D 8/0473; C21D 9/46; C22C 38/004; C22C 38/02; C22C 38/04; C22C 38/06; C22C 38/12; C23C 2/02; C23C 2/0224; C23C 2/06;** C21D 2211/005

(86) International application number:
**PCT/KR2018/014520**

(87) International publication number:
**WO 2019/124781 (27.06.2019 Gazette 2019/26)**

(54) **ZINC-BASED PLATED STEEL SHEET HAVING EXCELLENT ROOM TEMPERATURE AGING RESISTANCE AND BAKE HARDENABILITY, AND METHOD FOR PRODUCING SAME**

VERZINKTES STAHLBLECH MIT AUSGEZEICHNETER ALTERUNGSBESTÄNDIGKEIT BEI RAUMTEMPERATUR UND EINBRENNHÄRTBARKEIT UND VERFAHREN ZU SEINER HERSTELLUNG

TÔLE D'ACIER REVÊTUE D'UN PLACAGE À BASE DE ZINC AYANT UNE EXCELLENTE RÉSISTANCE AU VIEILLISSEMENT À TEMPÉRATURE AMBIANTE ET UNE EXCELLENTE APTITUDE AU DURCISSEMENT PAR CUISSON, ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2017 KR 20170178923**

(43) Date of publication of application:
**28.10.2020 Bulletin 2020/44**

(73) Proprietor: **POSCO Co., Ltd**
**Pohang-si, Gyeongsangbuk-do 37859 (KR)**

(72) Inventors:
• **LEE, Je-Woong**
  **Gwangyang-si, Jeollanam-do 57807 (KR)**

• **HAN, Sang-Ho**
  **Gwangyang-si, Jeollanam-do 57807 (KR)**

(74) Representative: **Meissner Bolte Partnerschaft mbB**
**Patentanwälte Rechtsanwälte**
**Postfach 86 06 24**
**81633 München (DE)**

(56) References cited:
JP-A- H0 426 747    JP-A- H07 268 544
JP-A- H07 268 544    JP-A- 2001 200 337
JP-A- 2001 200 337    JP-A- 2002 012 920
JP-A- 2002 012 920    JP-A- 2008 110 387
JP-B2- H07 116 581

## Description

[Technical Field]

The present disclosure relates to a zinc-based plated steel sheet and a method for manufacturing the same, and more particularly, to a zinc-based plated steel sheet having excellent room-temperature aging resistance and bake hardenability, appropriately applied to external panels of automobiles, and a method for manufacturing the same.

[Background Art]

A material for external panels of automobiles is required to have a fixed level of hardenability and aging resistance. Bake hardening refers to a phenomenon in which solid-solution carbon and nitrogen, activated during paint baking, are fixed to a dislocation occurring during working of a steel sheet to increase yield strength of the steel sheet. Steel having excellent bake hardenability has significantly ideal characteristics as a material for external panels of automobiles because forming of a steel sheet is easily performed before paint annealing and dent resistance of an end product is improved. However, when bake hardenability of the steel sheet is increased, aging resistance of the steel sheet tends to be deteriorated. Therefore, aging occurs with the lapse of a predetermined time even when the hardenability of the steel sheet is ensured, which results in an increased possibility that defects will occur during working of components. Accordingly, there is demand for development of a material, in which at least a certain level of anti-aging characteristics are secured while securing at least a certain level of bake hardenability, as a material for external panes of automobiles.

Patent Document 1 proposes a method for producing a steel material having excellent formability and bake hardenability. However, a planar anisotropy index ($\Delta r$) is significantly high due to insufficient optimization of operating conditions such as control of hot-rolled precipitates, an annealing temperature, and the like. Accordingly, wrinkle defects frequently occur on a vehicular knob during working of an external panel of an automobile.

Patent Document 2 proposes a steel sheet having improved ductility and elongation flange properties. The steel sheet has a composite structure including ferrite as a main phase, retained austenite as a secondary phase, and bainite and martensite as a low-temperature transformation phase. However, due to addition of large amounts of silicon (Si) and aluminum (Al) to secure a retained austenite phase, it is difficult to secure plating quality and also difficult to secure surface quality during steelmaking and continuous casting. In addition, since transformation induced plasticity causes an initial YS value to be increased, a yield ratio is high.

Patent Document 3 proposes a high-tensile hot-dip galvanized steel sheet including soft ferrite and hard martensite as a microstructure and having improved elongation and excellent workability with an improved r-value (anisotropy coefficient). However, addition of a large amount of silicon (Si) makes it difficult to secure excellent plating quality. In addition, addition of large amounts of titanium (Ti) and molybdenum (Mo) causes manufacturing costs to be significantly increased.

Patent document 4 relates to production of a steel sheet by applying a galvannealed layer having specific Fe concentration.

(Patent Document 1) Korean Patent Publication No. 10-2000-0038789 (published on May 7, 2000)
(Patent Document 2) Japanese Laid-Open Patent Publication No. 2004-292891 (published on October 21, 2004)
(Patent Document 3) Korean Patent Publication No. 10-2002-0073564 (published on September 27, 2002)
(Patent Document 4) JP H04 26747 A

[Disclosure]

[Technical Problem]

An aspect of the present disclosure is to provide a zinc-based plated steel sheet having excellent room-temperature aging resistance and bake hardenability and a method for manufacturing the same.

The present disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

[Technical Solution]

According to an aspect of the present disclosure, a zinc-based plated steel sheet having excellent room-temperature aging resistance and bake hardenability includes a base steel sheet and a zinc-based plated layer formed on a surface of the base steel sheet. The base steel sheet includes, by weight percentage (wt%), carbon (C) : 0.005% or less (excluding 0%), manganese (Mn) : 0.1 to 1.0%, silicon (Si) : 0.3% or less (excluding 0%), phosphorous (P) : 0.01 to 0.08%, sulfur (S): 0.01% or less, nitrogen (N) : 0.01% or less, soluble aluminum (sol.Al) : 0.01 to 0.06%, niobium (Nb) : 0.002 to 0.02%, boron (B) : 0.001 to 0.004% (excluding 0.001%), a balance of iron (Fe), and unavoidable impurities, and $R_B$ of Relational Expression 2 below is 1.2 or more,

$$\text{Relational Expression 2:}$$

$$R_B = R(BH)/R(AI),$$

where R(BH) of Relational Expression 2 denotes a concentration ratio of boron (B) present within 20 nm of a ferrite grain boundary in the base steel sheet in a grain direction during a heat treatment performed on the zinc-based plated steel sheet at a temperature of 170°C for 20 minutes, and

R(AI) of Relational Expression 2 denotes a concentration ratio of boron (B) present within 20 nm of a ferrite grain boundary in the base steel sheet in the grain direction during a heat treatment performed on the zinc-based plated steel sheet at a temperature of 100°C for 60 minutes.

The base steel sheet may be a cold-rolled steel sheet.

A microstructure of the base steel sheet may be a ferrite single-phase structure, and grains having an average diameter of 8 μm or less may account for 70% or more in grains of the ferrite single-phase structure, as a ratio of an area to a cross section of the steel sheet.

A lower-bake hardening (L-BH) value of the plated steel sheet may be 30 MPa or more, and an aging index (AI) of the plated steel sheet may be 0.2% or less.

Yield strength of the plated steel sheet may be 210 MPa or more, and an elongation of the plated steel sheet may be 35% or more.

Cs of Relational Expression 1 below may satisfy a range of 0.0002% to 0.002%.

$$\text{Relational Expression 1:} \quad C_S = [C]-(12/93)*[Nb]$$

where [C] and [Nb] of Relational Expression 1 refer to contents (wt%) of C and Nb of the base steel sheet, respectively. An aspect of the present disclosure, a zinc-based plated steel sheet having excellent room-temperature aging resistance and bake hardenability is manufactured by reheating a slab to a temperature within a range of 1160°C to 1250°C, the slab comprising, by weight percentage (wt%), carbon (C) : 0.005% or less (excluding 0%), manganese (Mn): 0.1 to 1.0%, silicon (Si): 0.3% or less (excluding 0%), phosphorous (P): 0.01 to 0.08%, sulfur (S) : 0.01% or less, nitrogen (N) : 0.01% or less, soluble aluminum (sol.Al) : 0.01 to 0.06%, niobium (Nb) : 0.002 to 0.02%, boron (B): 0.001 to 0.004% (excluding 0.001%), a balance of iron (Fe), and unavoidable impurities, hot rolling the reheated slab to a temperature within a range of 850°C to 1150°C to provide a hot-rolled steel sheet, cooling the hot-rolled steel sheet at an average cooling rate of 10°C/sec to 70°C/sec and coiling the cooled hot-rolled steel sheet to a temperature within a range of 500°C to 750°C, cold rolling the coiled hot-rolled steel sheet at a reduction ratio of 70% to 90% to provide a cold-rolled steel sheet, heating the cold-rolled steel sheet in a furnace atmosphere with a hydrogen concentration of 3% to 30% to a temperature within a range of 750°C to 860°C to be continuously annealed, cooling the continuously annealed cold-rolled steel sheet, and providing the cold-rolled steel sheet as a base steel sheet and dipping the cold-rolled steel sheet into a hot-dip zinc-based plating bath to manufacture a zinc-based plated steel sheet.

In this case, the cold rolling may be performed by sequential reduction using a plurality of rolling rolls and a reduction ratio of an initial rolling roll, among the plurality of rolling rolls, may be 20% to 40%. In the base steel, $R_B$ of Relational Expression 2 below is 1.2 or more,

$$\text{Relational Expression 2:}$$

$$R_B = R(BH)/R(AI),$$

where R(BH) of Relational Expression 2 denotes a concentration ratio of boron (B) present within 20 nm of a ferrite grain boundary in the base steel sheet in a grain direction during a heat treatment performed on the zinc-based plated steel sheet at a temperature of 170°C for 20 minutes, and

R(AI) of Relational Expression 2 denotes a concentration ratio of boron (B) present within 20 nm of a ferrite grain boundary in the base steel sheet in the grain direction during a heat treatment performed on the zinc-based plated steel sheet at a temperature of 100°C for 60 minutes.

The annealed cold-rolled steel sheet may be primarily cooled to a temperature within a range of 630°C to 670°C at an average cooling rate of 2°C/sec to 10°C/sec, and the primarily cooled cold-rolled steel sheet may be secondarily cooled to a temperature within a range of 440°C to 480°C at an average cooling rate of 3°C/sec to 20°C/sec.

The cold-rolled steel sheet may be dipped in a hot-dip zinc-based plating bath of 440°C to 480°C.

The zinc-based plated steel sheet may be temper-rolled at a reduction ratio of 0.3% to 1.6%.

[Advantageous Effects]

According to an aspect of the present disclosure, yield strength is 210 MPa or less, an aging index (AI) evaluating room-temperature aging resistance is 0.2 or less, and a lower-bake hardening (L-BH) value is 30 MPa or more. Therefore, a zinc-based plated steel sheet having excellent room-temperature aging resistance and bake hardenability and a method for the same may be provided.

[Best Mode for Invention]

The present disclosure relates to a zinc-based plated steel sheet having excellent room-temperature aging resistance and bake hardenability and a method for manufacturing the same. Hereinafter, example embodiments of the present disclosure will be described below. Example embodiments of the present disclosure may be modified in various forms, and the scope of the present disclosure should not be construed as being limited to the embodiments described below. These embodiments are provided to complete the present disclosure and to allow those skilled in the art to understand the scope of the disclosure.

A zinc-based plated steel sheet having excellent room-temperature aging resistance and bake hardenability according to an aspect of the present disclosure include a base steel sheet and a zinc-based plated layer formed on a surface of the base steel sheet.

The base steel sheet includes, by weight percentage (wt%), carbon (C): 0.005% or less (excluding 0%), manganese (Mn): 0.1 to 1.0%, silicon (Si) : 0.3% or less (excluding 0%), phosphorous (P): 0.01 to 0.08%, sulfur (S): 0.01% or less, nitrogen (N): 0.01% or less, soluble aluminum (sol.Al): 0.01 to 0.06%, niobium (Nb): 0.002 to 0.02%, boron (B): 0.001 to 0.004% (excluding 0.001%), a balance of iron (Fe), and unavoidable impurities.

The base steel sheet of the present disclosure may be a cold-rolled steel sheet, but should not be construed as necessarily limited to a cold-rolled steel sheet. In addition, the zinc-based plated layer of the present disclosure may include a hot-dip zinc-based plated layer and a hot-dip zinc-based alloy plated layer, but should not be construed as necessarily limited to a hot-dip zinc-based plated layer and a hot-dip zinc-based alloy plated layer.

Hereinafter, a composition of steel of the present disclosure will be described in detail. Hereinafter, unless otherwise specified, the content of each component means weight percentage (wt%).

C: 0.005% or less (excluding 0%)

Carbon (C) is an interstitial solid element. Carbon (C) solid-solubilized in steel enters a locking interaction with a dislocation, formed by temper rolling, to exhibit bake hardenability. Therefore, the higher the content of carbon (C), the more the hardenability is improved. In the present disclosure, since carbon (C) is necessarily added to achieve such an effect, 0% is be excluded from a lower limit of the content of carbon (C). However, when an excess amount of solid carbon (C) is present in steel, orange peel, a surface defect, may occur during component forming to cause poor aging. Therefore, in the present disclosure, an upper limit of the content of carbon (C) is 0.005%. In the present disclosure, a lower limit of the content of carbon (C) may not be necessarily limited. However, the lower limit of the content of carbon (C) may be limited to, in detail, 0.001% in consideration of the range of carbon (C) unavoidably included in a steelmaking process.

Mn: 0.1 to 1.0%

Manganese (Mn) is a solid-solution strengthening element, and not only contributes to an increase in strength of the steel but also serves to precipitate sulfur (S) in the steel as MnS. In the present disclosure, a lower limit of the content of manganese (Mn) is 0.1% to achieve an effect of improving drawability by precipitation of MnS. However, when an excessive amount of manganese (Mn) is added, the drawability may be lowered by excessive solid solution of manganese (Mn), independently of an increase in yield strength. For this reason, in the present disclosure, an upper limit of the content of manganese (Mn) may be limited to 1.0%. Therefore, in the present disclosure, the content of manganese (Mn) is in the range of 0.1% to 1.0%. The content of manganese (Mn) may be in the range of, in further detail, 0.2% to 0.9%.

Si: 0.3% or less (excluding 0%)

Silicon (Si) is an element contributing to an increase in strength of steel by solid solution strengthening. However, in the present disclosure, silicon (Si) is not an element intentionally added to secure strength. This is because even when silicon (Si) is not added, there is no significant difficulty in securing target physical properties. However, 0% is be excluded from the content of silicon (Si) in consideration of a range of the content of silicon (Si) inevitably included in a steelmaking process . On the other hand, when silicon (Si) is excessively added, characteristics of a plated surface may be deteriorated. Therefore, in the present disclosure, a lower limit of the content of silicon (Si) is 0.3%. The lower limit of the content of silicon (Si) maybe, in further detail, 0.2%.

P: 0.01 to 0.08%

Phosphorus (P) has an excellent solid solution effective and is most effective in securing strength of steel without significantly reducing drawability. In particular, phosphorus (P) is likely to be segregated in grain boundaries to inhibit grain growth during annealing, and thus, contributes to grain refinement to help in improvement of room-temperature aging resistance. In the present disclosure, a lower limit of the content of phosphorus (P) is 0.01% to achieve an effect of improving the strength and the room-temperature aging resistance. On the other hand, when phosphorus (P) is added excessively, there is possibility that an excess amount of solid solution P is segregated in the grain boundary to lose an opportunity for grain boundary segregation of Boron (B) and Carbon(C) required in the present disclosure. Accordingly, there is a possibility that target room-temperature aging resistance may not be secured. In addition, when phosphorus (P) is excessively added, secondary work brittleness may occur as the grain boundary segregation of phosphorus (P) is increased. For this reason, in the present disclosure, an upper limit of the content of phosphorus (P) is 0.08%. Therefore, in the present disclosure, the content of phosphorus (P) is in the range of 0.01% to 0.08%. The content of phosphorus (P) may be in the range of, in further detail, 0.015% to 0.075%.

S: 0.01% or less

Sulfur (S) is an impurity unavoidably included in the steelmaking process, and the content of sulfur (S) is preferably controlled to be as low as possible. In particular, since sulfur (S) in steel is an element increasing possibility that red shortness occurs, in the present disclosure, an upper limit of the content of sulfur (S) is 0.01%. The upper limit of the content of sulfur (S) may be, in further detail, 0.008%.

N: 0.01% or less

Nitrogen (N) is also an impurity unavoidably included in the steelmaking process. The content of nitrogen (N) is preferably controlled to be as low as possible. However, since refining costs may be significantly increased to control the content of nitrogen (N) to a low level, in the present disclosure, an upper limit of the content of nitrogen (N) is 0.01%, a range in which an operation may be performed. The upper limit of the content of nitrogen (N) may be, in further detail, 0.008%.

sol.Al: 0.01 to 0.06%

Soluble aluminum (sol.Al) is an element added for grain refinement and deoxidation. In the present disclosure, a lower limit of soluble aluminum (sol.Al) is limited to 0.01% to produce Al-killed steel. However, when soluble aluminum (sol.Al) is excessively added, it is advantageous to increase the strength of the steel due to a grain refinement effect. Meanwhile, inclusions are excessively formed during a steelmaking continuous casting operation to increase possibility that surface defects of a plated steel sheet occur and to result in a rapid increase in manufacturing costs. For this reason, in the present disclosure, an upper limit of the content of soluble aluminum (sol.Al) is limited to 0.06%. Therefore, in the present disclosure, the content of soluble aluminum (sol.Al) is in the range of 0.01% to 0.06%. The content of soluble aluminum (sol.Al) may be in the range of, in further detail, 0.02% to 0.055%.

Nb: 0.002 to 0.02%

Niobium (Nb) is a major element affecting bake hardenability and aging resistance of steel in the present disclosure. As the content of carbon (C) solid-solubilized in the steel is increased, the aging resistance is improved while the bake hardenability tends to be decreased. However, since niobium (Nb) binds to carbon (C) in the steel during hot rolling to form NbC precipitates, the content of solid-solubilized carbon (C) may be controlled. Accordingly, in the present disclosure, the content of niobium (Nb) is adjusted to an appropriate level to control the content of carbon (C) solid-solubilized in the steel to an appropriate level. As a result, the present disclosure is aimed at securing bake hardenability and aging resistance of an appropriate level or higher.

When the content of niobium (Nb) is less than 0.002%, the content of carbon (C) precipitated as NbC is significantly low. Therefore, most of the carbon (C) in the steel remains in the form of solid carbon (C) to prevent room-temperature aging resistance from being sufficiently secured. In addition, when the content of niobium (Nb) is greater than 0.02%, most of the carbon (C) in the steel is precipitated as NbC to cause an absolutely low content of carbon (C) solid-solubilized in the steel. Accordingly, desired bake hardenability may not be secured. Therefore, in the present disclosure, the content of niobium (Nb) is in the range of 0.002% to 0.02%. The content of niobium (Nb) may be in the range of, in detail, 0.003 to 0.02%. The content of niobium (Nb) may be in the range of, in further detail, 0.004 to 0.015%.

B: 0.001 to 0.004% (excluding 0.001%)

Boron (B) is an important element affecting bake hardenability and aging resistance of a steel material in the present disclosure. Boron (B) is known as an element added to prevent secondary working embrittlement caused by grain boundary embrittlement in ultra-low carbon steel including a large amount of phosphorus (P) . Since boron (B) is an element having a higher grain boundary segregation tendency than other elements, boron (B) may inhibit grain boundary segregation of phosphorus (P) by addition of boron (B) to prevent the secondary working embrittlement. However, the present inventors conducted a great number of experiments, associated with room-temperature aging resistance and bake hardenability, using grain boundary segregation characteristics of boron (B) and reached the content of boron (B) of the present disclosure, based on the results of the experiments.

Aging property and bake hardenability are similar in mechanism, and are mechanisms caused by a locking interaction between dislocation and solid-solution elements (C, B, and the like). For example, as the locking interaction between the solid-solution elements and the dislocation is increased, both the aging property and the bake hardenability are increased. Since bake hardening steel used as a material for external panels of automobiles is advantageous as aging hardenability is excellent and aging property is low, that is, aging hardenability and aging resistance are excellent, it is important to secure at least a certain level of aging hardenability and aging resistance by controlling an appropriate level of alloying components.

When boron (B) is segregated in grain boundaries during annealing of steel to be stabilized at room temperature, most of the boron (B) remains in the grain boundaries at a low aging evaluation temperature (about 100°C) and diffusion of boron (B) into the grain boundaries is inhibited. Accordingly, a locking interaction between dislocation and boron (B) is inhibited to effectively secure room-temperature aging resistance. On the other hand, boron (B) segregated in the grain boundaries may be easily diffused into grains to be solid-solubilized at a relatively high baking temperature (about 170°C), and the boron (B) solid-solubilized in the grains and the dislocation may interact with each other to secure bake hardenability. That is, the present disclosure is aimed at securing at least a certain level of aging resistance and aging hardenability using behavior characteristics of boron (B) exhibited to be different at an aging evaluation temperature (about 100°C) and a baking temperature (170°C).

Since the present disclosure is aimed at securing at least a certain level of the content of boron (B) diffused into grains at a baking temperature to secure bake hardenability, a lower limit of the content of boron (B) is limited to a range greater than 0.001%. On the other hand, when boron (B) is excessively added, it is excessively segregated in grain boundaries to inevitably lower aging resistance, independently of an increase in bake hardenability. Accordingly, there is high possibility that plating layer separation of a plated steel sheet occurs. Accordingly, an upper limit of the content of boron (B) is limited to 0.004%. Therefore, in the present disclosure, the content of boron (B) is in the range of more than 0.001% to 0.004% or less. The content of boron (B) may be in the range of, in detail, more than 0.001% to 0.003% or less. The content of boron (B) may be in the range of, in further detail, more than 0.0013% to 0.0025% or less.

In the present disclosure, the zinc-based steel sheet includes a balance of iron (Fe) and unavoidable impurities, other than the above-mentioned steel composition. The unavoidable impurities may be unintentionally mixed in a conventional steelmaking process and may not be entirely excluded, which will be easily understood by a person of an ordinary skill in the steel manufacturing industry. Moreover, addition of another composition, other than the above-mentioned steel composition, is not entirely excluded in the present disclosure.

In the base steel sheet included in the zinc-based plated steel sheet having excellent room-temperature aging resistance and bake hardenability according to an aspect of the present disclosure, the contents of carbon (C) and niobium (Nb) may be limited such that Cs of Relational Expression 1 below satisfies a range of 0.0002% to 0.002%,

```
Relational Expression 1:

C_S = [C]-(12/93)*[Nb]
```

where [C] and [Nb] of Relational Expression 1 refer to contents (wt%) of C and Nb of the base steel sheet, respectively.

In additional, in the base steel sheet included in the zinc-based plated steel sheet having excellent room-temperature aging resistance and bake hardenability according to an aspect of the present disclosure, $R_B$ of Relational Expression 2 below is 1.2 or more.

```
Relational Expression 2:

R_B = R(BH)/R(AI)
```

R(BH) of Relational Expression 2 denotes a concentration ratio of boron (B) present within 20 nm of a ferrite grain boundary in the base steel sheet in a grain direction during a heat treatment performed on the zinc-based plated steel sheet according to an aspect of the present disclosure at a temperature of 170°C for 20 minutes, and R(AI) of Relational Expression 2 denotes a concentration ratio of boron (B) present within 20 nm of a ferrite grain boundary in the base steel sheet in the grain direction during a heat treatment performed on the zinc-based plated steel sheet according to an aspect of the present disclosure at a temperature of 100°C for 60 minutes.

Hereinafter, relational expressions of the present disclosure will be described in further detail.

```
Relational Expression 1:

C_S = [C]-(12/93)*[Nb]
```

In Relational Expression 1, [C] and [Nb] refer to contents (wt%) of C and Nb of the base steel sheet, respectively. In the present disclosure, the contents of carbon (C) and niobium (Nb) of the base steel sheet are controlled such that a value of Cs calculated through Relational Expression 1 satisfies a range of 0.0002% to 0.002%.

In Relational Expression 1, Cs refers to the content of solid carbon (C) remaining in steel after carbon (C) included in a steel material is precipitated as NbC due to addition of niobium (Nb). The present inventors experimentally confirmed that when the value of Cs calculated through Relational Expression 1 was controlled to a certain level, aging resistance and bake hardenability may be secured above a certain level. In addition, the present inventors experimentally confirmed that when the contents of carbon (C) and niobium (Nb) included in the base steel sheet were controlled such that the value of Cs calculated through Relational Expression 1 satisfied 0.0002% to 0.002%, target aging resistance and target bake hardenability of the present disclosure might be ensured.

When the value of Cs is less than 0.0002%, there is almost no carbon (C) solid-solubilized in the base steel sheet. Therefore, a lower-bake hardening (L-BH) value of 30 MPa or more required in the present disclosure may not be secured. When the value of Cs is less than 0.0002%, an excessive amount of boron (B) may be added to ensure bake hardenability due to solid boron (B), but castability may be deteriorated in a manufacturing process due to the addition of the excessive amount of boron (B) . Further, an excessive amount of boron (B) oxide is present between a base steel sheet and a zinc-based plated layer in an end product to cause plating separation. In addition, when the value of Cs is greater than 0.002%, aging resistance may be problematic due to the carbon (C) solid-solubilized in the base steel sheet and aging guarantee of 6 months or more, required by the customer, may be problematic . Accordingly, Relational Expression 1 of the present disclosure proposes conditions for ensuring optimal aging resistance and bake hardenability, and the contents of carbon (C) and niobium may be controlled such that the value of Cs of Relational Expression 1 satisfies a range of 0.0002% to 0.002%.

```
Relational Expression 2:

R_B = R(BH)/R(AI)
```

R(BH) of Relational Expression 2 denotes a concentration ratio of boron (B) present within 20 nm of a ferrite grain boundary in the base steel sheet in a grain direction during a heat treatment performed on the zinc-based plated steel sheet according to an aspect of the present disclosure at a temperature of 170°C for 20 minutes, and R(AI) of Relational Expression 2 denotes a concentration ratio of boron (B) present within 20 nm of a ferrite grain boundary in the base steel sheet in the grain direction during a heat treatment performed on the zinc-based plated steel sheet according to an aspect of the present disclosure at a temperature of 100°C for 60 minutes. In the base steel sheet of the present disclosure, the value of $R_B$ calculated through Relational Expression 1 may satisfy a range of 1.2 or more.

Relational Expression 2 shows the behavior of temperature-dependent concentrations of boron (B) in a grain boundary and a grain, and means a ratio between a concentration of boron (B) distributed in grains at an aging evaluation temperature (about 100°C) and a concentration of boron (B) distributed in a grain boundary at a baking temperature (about 170°C). The present inventors examined grain boundary segregation and diffusion migration of boron (B) through various experimental conditions and confirmed that at least a certain level of bake hardenability and aging resistance could be secured only when the value of $R_B$ of Relational Expression 2 is higher than a certain level. In particular, various factors such as a grain size, the content of boron (B), and the like, in the base steel sheet have an effect on grain boundary segregation and diffusion migration of boron (B). Nonetheless, Relational Expression 2 has a technical significance in that a unified result may be derived using a ratio between the content of boron (B) segregated in a grain boundary under a low temperature condition during a heat treatment and the content of boron (B) diffusing and migrating into a grain under a high temperature condition during a heat treatment. That is, the present inventors confirmed that when the value of $R_B$ calculated through Relational Expression 2 was less than 1.2, the steel sheet did not satisfy characteristics required in the present disclosure, and when the content of boron (B) was relatively small or grains were coarse, the value of $R_B$ of 1.2 was derived, and thus, at least a certain level of bake hardenability and aging resistance could not be secured.

A lower-bake hardening (L-BH) value of the zinc-based plated steel sheet according to an aspect of the present disclosure satisfies an aging index (AI) of 0.2% or more while satisfying 30 MPa or more. In addition, since the zinc-based plated steel sheet according to an aspect of the present disclosure has yield strength of 210 MPa or more and an elongation of 35% or more, physical properties appropriate to a sheet material for external panels of automobiles is secured.

The base steel sheet of the zinc-based plated steel sheet according to an aspect of the present disclosure includes a ferrite single-phase structure as a microstructure, and crystal grains having an average diameter of 8 um or less account for 70% of grains of the ferrite single-phase structure. For example, when grains of the microstructure are coarse, an effect may be insufficiently implemented in spite of the addition of boron (B) . Thus, the base steel sheet of the present disclosure is preferably provided with grains refined to be a certain level or lower.

A method of manufacturing a zinc-base plated steel sheet having excellent room-temperature aging resistance and bake hardenability according to an aspect of the present disclosure includes dipping a base steel sheet having the above-described composition and conditions in a hot-dip zinc-base plating bath, such that plating is performed to manufacture a plated steel sheet.

Hereinafter, the manufacturing method of the present disclosure will be described in detail.

Amethod for manufacturing a zinc-based plated steel sheet having excellent room-temperature aging resistance and bake hardenability according to an aspect of the present disclosure includes reheating a slab to a temperature within a range of 1160°C to 1250°C, the slab including, by weight percentage (wt%), carbon (C): 0.005% or less (excluding 0%), manganese (Mn): 0.1 to 1.0%, silicon (Si): 0.3% or less (excluding 0%), phosphorous (P): 0.01 to 0.08%, sulfur (S): 0.01% or less, nitrogen (N): 0.01% or less, soluble aluminum (sol.Al): 0.01 to 0.06%, niobium (Nb): 0.002 to 0.02%, boron (B): 0.001 to 0.004% (excluding 0.001%), a balance of iron (Fe), and unavoidable impurities, hot rolling the reheated slab to a temperature within a range of 850°C to 1150°C to provide a hot-rolled steel sheet, cooling the hot-rolled steel sheet at an average cooling rate of 10°C/sec to 70°C/sec and coiling the cooled hot-rolled steel sheet to a temperature within a range of 500°C to 750°C, cold rolling the coiled hot-rolled steel sheet at a reduction ratio of 70% to 90% to provide a cold-rolled steel sheet, heating the cold-rolled steel sheet in a furnace atmosphere with a hydrogen concentration of 3% to 30% to a temperature within a range of 750°C to 860°C to be continuously annealed, cooling the continuously annealed cold-rolled steel sheet, and providing the cold-rolled steel sheet as a base steel sheet and dipping the cold-rolled steel sheet into a hot-dip zinc-based plating bath to manufacture a zinc-based plated steel sheet.

In this case, the cold rolling may be performed by sequential reduction using a plurality of rolling rolls and a reduction ratio of an initial rolling roll, among the plurality of rolling rolls, is 20% to 40%. In the base steel, Cs of Relational Expression 1 below may satisfy a range of 0.0002% to 0.002%, and $R_B$ of Relational Expression 2 below is 1.2 or more,

```
Relational Expression 1:

Cs = [C]-(12/93)*[Nb]
```

where [C] and [Nb] of Relational Expression 1 refer to contents (wt%) of C and Nb of the base steel sheet, respectively, and

Relational Expression 2:

$$R_B = R(BH)/R(AI),$$

where R(BH) of Relational Expression 2 denotes a concentration ratio of boron (B) present within 20 nm of a ferrite grain boundary in the base steel sheet in a grain direction during a heat treatment performed on the zinc-based plated steel sheet at a temperature of 170°C for 20 minutes, and R(AI) of Relational Expression 2 denotes a concentration ratio of boron (B) present within 20 nm of a ferrite grain boundary in the base steel sheet in the grain direction during a heat treatment performed on the zinc-based plated steel sheet at a temperature of 100°C for 60 minutes.

**Reheating Slab**

Since the steel composition of the slab of the present disclosure corresponds to the above-described steel composition of the steel sheet, the description of the steel composition of slab steel of the present disclosure is replaced with the above-described description of the steel composition of the steel sheet. A slab having the above-described composition is reheated to a temperature within a certain temperature range. When the reheating temperature is lower than 1160°C, inclusions and the like of the slab are insufficiently redissolved to provide causes of occurrence of surface defects and material variations after hot rolling. When the reheating temperature is higher than 1250°C, strength of a final steel material may be lowered due to abnormal growth of austenite grains. Therefore, in the present disclosure, the slab reheating temperature range is 1160°C to 1250°C.

**Hot Rolling**

The reheated slab is hot-rolled to provide hot-rolled to provide a hot-rolled steel sheet. When an initiation temperature of the hot rolling is higher than 1150°C, a temperature of the hot-rolled steel sheet may be excessively increased to coarsen grains and to deteriorate surface quality of the hot-rolled steel sheet. When a termination temperature of the hot rolling is lower than 850°C, elongated grains develop due to excessive recrystallization retardation and a high yield ratio is obtained. For this reason, cold rollability and shear workability may be deteriorated. Therefore, in the present disclosure, the hot rolling is performed to a temperature within the range of 850°C to 1150°C.

**Cooling and Coiling**

The hot-rolled steel sheet after hot-rolling is cooled to a temperature within the range of 500°C to 750°C at an average cooling rate of 10°C/sec to 70°C/sec and is then rolled within a temperature range of 500°C to 750°C to provide a hot-rolled coil. When the average cooling rate is less than 10°C/sec, coarse ferrite grains are formed to cause non-uniformity of the microstructure. When the average cooling rate is greater than 70°C/sec, not only a shape of the steel sheet may be deteriorated but also the non-uniformity of the microstructure may be caused to deteriorate the shear workability of the steel sheet. When the coiling temperature of the hot-rolled steel sheet is lower than 500°C, the shape of the steel sheet may be deteriorated due to an excessively low coiling temperature. When the coiling temperature of the hot-rolled steel sheet is higher than 750°C, coarse ferrite grains may be formed and coarse carbide and nitride may be formed. Thus, the material of the steel may be deteriorated.

**Cold rolling**

Cold rolling is performed at a reduction ratio of 70 to 90%. When the reduction ratio of the cold rolling is less than 70%, it may be difficult to secure a target thickness of an end product and it may be difficult to correct a shape of the steel sheet. When the reduction ratio of the cold rolling is greater than 90%, cracking may occur in an edge portion of the steel sheet and an excessive load may be applied to a cold-rolling facility.

The cold rolling of the present disclosure may be performed by a plurality of rolling rolls, sequentially disposed in one direction, and a reduction ratio achieved by an initial rolling roll may be limited to a certain range. When the reduction ratio achieved by the initial rolling roll is less than 20%, there is a limit in controlling the shape of the steel sheet and securing the microstructure. In particular, when the reduction ratio achieved by the initial rolling roll is less than 20%, grains having an average diameter of 8um or less may account for 70% or more in grains of the ferrite single-phase structure, as an area ratio to a cross section of the base steel sheet. In addition, when the reduction ratio achieved by the initial rolling roll is greater than 40%, there may be possibility that a facility load is caused. Therefore, in the present disclosure, the reduction ratio achieved by the initial rolling roll may be limited to 20% to 40%. The reduction ratio achieved by the initial rolling roll may be, in further detail, 25% to 35%.

**Continuous Annealing**

The cold-rolled steel sheet after cold rolling is heated to a temperature within a range of 750°C to 860°C to be continuously annealed. When the annealing temperature is lower than 750°C, recrystallization may be insufficiently completed to cause a high possibility that a mixed grain structure is formed. When the annealing temperature is higher than 860°C, there may be is a high possibility a facility load is generated in an annealing furnace. Therefore, in the present disclosure, the continuous annealing temperature is 750°C to 860°C and, in further detail, 770°C to 830°C.

In the present disclosure, the continuous annealing is performed in a furnace atmosphere with a hydrogen concentration of 3% to 30%. When the hydrogen concentration is less than 3%, there may be a high possibility of surface enrichment of elements having a high affinity with oxygen such as silicon (Si), manganese (Mn), and boron (B) included in the steel, and thus, dent defects and plating defects may occur. When the hydrogen concentration exceeds 30%, an effect of inhibiting the defects resulting from Si, Mn, and B reaches the limit and may cause an excessive increase in manufacturing costs . Therefore, the continuous annealing is performed in a furnace atmosphere with a hydrogen concentration of 3% to 30%, and the hydrogen concentration may be in the range of, in further detail, 5% to 20%.

**Primary Cooling**

The cold-rolled steel sheet after the continuous annealing may be primarily cooled to a temperature within the range of 630°C to 670°C at an average cooling rate of 2°C/sec to 10°C/sec. When the average cooling rate of the primary cooling is lower than 2°C/sec or when the cooling termination temperature of the primary cooling is higher than 670°C, grains of the ferrite single-phase structure are excessively coarsened to prevent a sufficient grain boundary segregation effect of boron (B) from occurring. For example, since an occupation rate of grains having an average diameter of 8um or less is less than 70% as a ratio of an area to a cross section of the base steel sheet, the sufficient grain boundary segregation effect of boron (B) may not occur even when boron (B) is added in a certain amount or more. When the average cooling rate of the primary cooling is greater than 10°C/sec or the cooling termination temperature of the primary cooling is less than 630°C/sec, the grains of the ferrite single-phase structure may be refined to increase the grain boundary segregation effect of boron (B). However, the steel sheet may be distorted and excessive facility temperature imbalance may occur before and after the cooling process, which may cause a facility load.

**Secondary cooling**

The cold-rolled steel sheet after the primary cooling may be secondarily cooled to a temperature within a range of 440°C to 480°C at an average cooling rate of 3°C/sec to 20°C/sec. In the present disclosure, the cooling rate of the secondary cooling has no significant effect on the physical properties of the steel sheet, but the secondary cooling rate is controlled to a certain range to secure an excellent shape of the steel sheet. When the cooling rate of the secondary cooling is higher than 20°C/sec, problems such as distortion of the steel plate shape may occur. When the cooling rate of the secondary cooling is less than 3°C/sec, it may be economically disadvantageous due to a significant low cooling rate.

**Dipping into Plating Bath**

The cold-rolled steel sheet after the secondary cooling may be dipped in a hot-dip zinc-based plating bath to form a zinc-based plated layer. The zinc-based plating bath may be a pure zinc (Zn) plating bath, or may be a zinc-based alloy plating bath including silicon (Si), aluminum (Al), magnesium (Mg), and the like. As necessary, an alloying heat treatment may be performed on the zinc-based plated steel sheet. The alloying heat treatment may be performed at a temperature range of 500°C to 540°C.

**Temper Rolling**

As necessary, temper rolling may be performed to provide additional bake hardenability to the zinc-based plated steel sheet. When a reduction ratio of the temper rolling is less than 0.3%, there is a high possibility that a sufficient dislocation required to secure the bake hardenability is not formed. When the reduction ratio is greater than 1.6%, plating surface defects may occur. The reduction ratio of the temper rolling may be limited to 0.3 to 1.6%. The reduction ratio of the temper rolling may be limited to, in further detail, 0.5 to 1.4%.

[Mode for Invention]

Hereinafter, the present disclosure will be described more fully in connection with examples. However, it is understood that the description proposed herein is just a preferable example for the purpose of illustrations only, the scope of the present disclosure is determined by the appended claims.

After producing a steel slab having an alloying composition shown in Table 1 below, zinc-based plated steel sheet specimens were prepared through a manufacturing process based on Table 2 below. For the reference, steel types 1, 2, 4, and 5 in Table 1 correspond to alloyed hot-dip galvanized steel sheets (GA steel sheets), and steel types 3 and 6 correspond to hot-dip galvanized steel sheets. Steel types 7 and 8 refer to BH steels using ordinary ultra-low carbon steel.

Table 1

| Steel Type | Alloying Component (wt%) | | | | | | | | |
|---|---|---|---|---|---|---|---|---|---|
| | C | Mn | Si | P | S | N | sol.Al | Nb | B |
| 1 | 0.0018 | 0.41 | 0.06 | 0.032 | 0.006 | 0.003 | 0.021 | 0.0078 | 0.0028 |
| 2 | 0.0019 | 0.35 | 0.05 | 0.041 | 0.005 | 0.003 | 0.034 | 0.0081 | 0.0031 |
| 3 | 0.0021 | 0.82 | 0.05 | 0.016 | 0.004 | 0.002 | 0.045 | 0.0065 | 0.0031 |
| 4 | 0.0016 | 0.25 | 0.06 | 0.035 | 0.004 | 0.003 | 0.043 | 0.0052 | 0.0034 |
| 5 | 0.0035 | 0.18 | 0.04 | 0.071 | 0.006 | 0.004 | 0.052 | 0.016 | 0.0013 |
| 6 | 0.0046 | 0.43 | 0.08 | 0.035 | 0.004 | 0.005 | 0.026 | 0.018 | 0.0012 |
| 8 | 0.0019 | 0.61 | 0.06 | 0.062 | 0.004 | 0.002 | 0.035 | 0.0081 | 0.0007 |
| 8 | 0.0021 | 0.38 | 0.07 | 0.064 | 0.007 | 0.004 | 0.045 | 0 | 0 |

Table 2

| ⊢ | ᄂ ·ᅥ | Hot Rolling | Cold Rolling | Continuous Annealing |
|---|---|---|---|---|

| | | Reheating Temperature (°C) | Finish Rolling Temperature (°C) | Coiling Temperature (°C) | Cooling Rate Before Coiling (°C/sec) | Cold Reduction Ratio (%) | Initial Cold-Rolled Stand Reduction Ratio (%) | Annealing Temperature (°C) | Concentration of Hydrogen in Furnace (%) | Primary Cooling Rate (°C/sec) | Secondary Cooling Rate (°C/sec) | Tempering Reduction Ratio (%) |
|---|---|---|---|---|---|---|---|---|---|---|---|---|
| 1 | Con1 | 1185 | 912 | 582 | 25 | 81 | 29 | 782 | 5.1 | 2.7 | 4.2 | 0.8 |
| | Con2 | 1184 | 921 | 602 | 24 | 79 | 26 | 785 | 4.5 | 2.5 | 4.3 | 0.92 |
| 2 | Con3 | 1187 | 918 | 565 | 31 | 82 | 28 | 792 | 5.2 | 3.5 | 3.3 | 0.85 |
| | Con4 | 1187 | 896 | 581 | 28 | 81 | 23 | 796 | 6.1 | 3.0 | 3.7 | 0.78 |
| 3 | Con5 | 1214 | 903 | 712 | 27 | 79 | 30 | 801 | 5.8 | 4.3 | 5.1 | 1.2 |
| | Con6 | 1212 | 924 | 708 | 45 | 78 | 33 | 812 | 5.2 | 9.1 | 6.1 | 1.3 |
| 4 | Con7 | 1195 | 912 | 765 | 43 | 79 | 31 | 811 | 6.1 | 5.6 | 6.3 | 1.1 |
| | Con8 | 1196 | 921 | 602 | 35 | 78 | 34 | 806 | 3.5 | 5.2 | 8.4 | 1.45 |
| 5 | Con9 | 1224 | 914 | 612 | 32 | 65 | 18 | 802 | 3.5 | 4.5 | 11.4 | 0.3 |
| | Con10 | 1228 | 923 | 635 | 6 | 86 | 42 | 798 | 3.1 | 8.5 | 12.1 | 0.8 |
| 6 | Con11 | 1187 | 906 | 623 | 19 | 74 | 17 | 772 | 3.5 | 7.7 | 8.9 | 0.8 |
| | Con12 | 1194 | 908 | 625 | 22 | 82 | 34 | 798 | 33.1 | 12.2 | 7.2 | 0.92 |
| 7 | Con13 | 1189 | 916 | 596 | 25 | 81 | 35 | 825 | 3.6 | 4.8 | 6.5 | 1.03 |
| 8 | Con14 | 1201 | 915 | 632 | 26 | 80 | 37 | 826 | 4.4 | 3.9 | 6.5 | 1.36 |

Con1 to Con14: Condition 1 to Condition 14

Zinc-based alloying plated steel sheet specimens were prepared under conditions of Table 2 using the slabs having the compositions shown in Table 1. Physical properties of each specimen were evaluated and evaluation results are shown in Table 3 below. Tensile strength was measured by tensile test in a length direction of the specimen according to the ASTM standards. An aging index (AI) was measured as an elongation (YP-EL) at a yield point by performing a tensile test in a direction, perpendicular to a rolling direction, after thermally treating each of the specimens at a temperature of 100°C for 60 minutes. A microstructure was examined by observing a point of 1/4*t (t referring to a thickness of a specimen) of a base steel sheet with an optical microscope with respect to a cut surface of each of the specimens. Values of R(BH) and R(AI), associated with Relational Expression 2, were obtained by observing boron (B) in units of atoms at the point of 1/4*t (t referring to a thickness of a specimen) of the base steel sheet using an atom probe tomography (APT) to measure a concentration ratio thereof.

Table 3

| Steel Type | Classification | Occupation Rate of Grains Having Average Diameter of 8μm or less (%) | Relational Expression 1 $C_S$ (wt%) | Relational Expression 2 $R_B$ | AI(YP-EL) (%) | L-BH (MPa) | YS (MPa) | TS (MPa) | EL (%) | Note |
|---|---|---|---|---|---|---|---|---|---|---|
| 1 | Con1 | 76.1 | 0.0008 | 1.35 | 0 | 38 | 221 | 365 | 39 | IE1 |
| | Con2 | 79.0 | 0.0008 | 1.42 | 0 | 39 | 226 | 371 | 38 | IE2 |
| 2 | Con3 | 81.2 | 0.0009 | 1.36 | 0 | 36 | 216 | 365 | 40 | IE3 |
| 3 | Con4 | 80.6 | 0.0009 | 1.42 | 0 | 36 | 215 | 362 | 40 | IE4 |
| | Con5 | 78.5 | 0.0013 | 1.28 | 0 | 37 | 243 | 382 | 37 | IE5 |
| | Con6 | 77.5 | 0.0013 | 1.46 | 0 | 36 | 246 | 386 | 36 | IE6 |
| 4 | Con7 | 35.6 | 0.0009 | 1.03 | 0.36 | 32 | 216 | 356 | 41 | CE1 |
| | Con8 | 78.2 | 0.0009 | 1.43 | 0 | 35 | 217 | 358 | 41 | IE7 |
| 5 | Con9 | 63.5 | 0.0014 | 1.18 | 0.65 | 42 | 231 | 364 | 38 | CE2 |
| | Con10 | 61.5 | 0.0014 | 1.06 | 0.42 | 41 | 236 | 369 | 37 | CE3 |
| 6 | Con11 | 67.7 | 0.0023 | 1.22 | 0.22 | 25 | 257 | 376 | 33 | CE4 |
| | Con12 | 85.6 | 0.0023 | 1.30 | 0.39 | 38 | 221 | 368 | 37 | CE5 |
| 7 | Con13 | 66.3 | 0.0009 | 0.4 | 0 | 19 | 216 | 346 | 41 | CE6 |
| 8 | Con14 | 63.2 | 0.0021 | 0 | 1.23 | 26 | 221 | 359 | 37 | CE7 |

Con1 to Con14: Condition 1 to Condition 14

IE: Inventive Example / CE: Comparative Example

The characteristics required in the present disclosure are basically yield strength of 210 MPa, lower-bake hardenability (L-BH) value of 30 MPa, and an aging index (AI, YP-EL) which should satisfy 0.2 or less to have aging resistance guarantee of 6 month or more at room temperature. It is confirmed that Inventive Examples satisfied all of the required characteristics but, but Comparative Examples 1 to 7 did not satisfy at least one of the required characteristics, and thus, did not satisfy one of the characteristics such as high strength, room-temperature aging resistance, and bake hardenability.

As can be seen from Tables 1 to 3, in Inventive Examples 1 to 7 satisfying the alloying composition and manufacturing conditions limited by the present disclosure, an area ratio of grains having an average grain size of 8 um or less in a cross section of the base steel sheet was secured to be 70% or more. Also, it is confirmed that in the lower-bake hardenability (L-BH) value satisfied 30 MPa or more and the aging index (AI, YP-EL) satisfied 0.2% or less.

On the other hand, it is confirmed that since Comparative Examples 1 to 3 satisfied the alloying composition of the present disclosure but did not satisfy process conditions of the present disclosure, grains of the base steel sheet were coarsely formed and a value of $R_B$ calculated by Relational Expression 2 was less than 1.2, and thus, a target aging index was not secured. It is confirmed that since Comparative Examples 4 and 5 satisfied the alloying composition of the present disclosure but a value of Cs calculated by Relational Expression 1 was greater than 0.002, the aging index (AI, YP-EL) was greater than 2.0, and thus, aging resistance characteristics were deteriorated. It is also confirmed that since a reduction ratio of an initial rolling role was less than 20%, an area ratio of grains having an average grain size of 8 um or less in a cross section of a base steel sheet was less than 70%.

In Comparative Examples 6 and 7, it is confirmed that the content of boron (B) was less than the content of B in the present disclosure, and thus, bake hardening characteristics were deteriorated. In particular, in Comparative Example 6, it is confirmed that a value of Cs calculated through Relational Expression 1 satisfies the range of the present disclosure, but the content of B was only 0.0007%, bake hardening characteristics required in the present disclosure were satisfied.

Therefore, according to an aspect of the present disclosure, a zinc-based plated steel sheet having excellent room-temperature aging resistance in which, yield strength is 210 MPa or more, an aging index (AI) for evaluating room-temperature aging resistance is 0.2 or less, and lower-bake hardening (L-BH) value for evaluating bake hardenability is 30 MPa or more, and a method for manufacturing the same are provided.

While the present disclosure has been described in detail with reference to the examples, the present disclosure may be embodied in many different forms. Accordingly, the technical idea and the scope of claims set forth below are not limited to the preferred examples.

**Claims**

1. A zinc-based plated steel sheet having excellent room-temperature aging resistance and bake hardenability, the zinc-based plated steel sheet comprising:

   a base steel sheet and a zinc-based plated layer formed on a surface of the base steel sheet, wherein the base steel sheet comprises, by weight percentage (wt%), carbon (C): 0.005% or less, excluding 0%, manganese (Mn): 0.1 to 1.0%, silicon (Si): 0.3% or less, excluding 0%, phosphorous (P): 0.01 to 0.08%, sulfur (S): 0.01% or less, nitrogen (N): 0.01% or less, soluble aluminum (sol.Al): 0.01 to 0.06%, niobium (Nb): 0.002 to 0.02%, boron (B): 0.001 to 0.004%, excluding 0.001%, a balance of iron (Fe), and unavoidable impurities, and $R_B$ of Relational Expression 2 below is 1.2 or more,

   $$\text{Relational Expression 2:}$$
   $$R_B = R(BH)/R(AI),$$

   where R(BH) of Relational Expression 2 denotes a concentration ratio of boron (B) present within 20 nm of a ferrite grain boundary in the base steel sheet in a grain direction during a heat treatment performed on the zinc-based plated steel sheet at a temperature of 170°C for 20 minutes, and
   R(AI) of Relational Expression 2 denotes a concentration ratio of boron (B) present within 20 nm of a ferrite grain boundary in the base steel sheet in the grain direction during a heat treatment performed on the zinc-based plated steel sheet at a temperature of 100°C for 60 minutes,
   wherein a lower-bake hardening (L-BH) value of the plated steel sheet is 30 MPa or more, and an aging index (AI) of the plated steel sheet is 0.2% or less, measured as defined in the description.

2. The zinc-based plated steel sheet of claim 1, wherein the base steel sheet is a cold-rolled steel sheet.

3. The zinc-based plated steel sheet of claim 1, wherein a microstructure of the base steel sheet is a ferrite single-phase structure, and
   grains having an average diameter of 8 $\mu$m or less accounts for 70% or more in grains of the ferrite single-phase structure, as a ratio of an area to a cross section of the steel sheet.

4. The zinc-based plated steel sheet of claim 1, wherein yield strength of the plated steel sheet is 210 MPa or more, and an elongation of the plated steel sheet is 35% or more,
   the yield strength and the elongation are measured in a length direction of the specimen according to the ASTM standards.

5. The zinc-based plated steel sheet of claim 1, wherein $C_S$ of Relational Expression 1 below satisfies a range of 0.0002% to 0.002%,

$$\text{Relational Expression 1:}$$
$$C_S = [C]-(12/93)*[Nb]$$

where [C] and [Nb] of Relational Expression 1 refer to contents (wt%) of C and Nb of the base steel sheet, respectively.

6. A method for manufacturing the zinc-based plated steel sheet of claim 1 having excellent room-temperature aging resistance and bake hardenability, the method comprising:

reheating a slab to a temperature within a range of 1160°C to 1250°C, the slab comprising, by weight percentage (wt%), carbon (C): 0.005% or less, excluding 0%, manganese (Mn): 0.1 to 1.0%, silicon (Si): 0.3% or less, excluding 0%, phosphorous (P): 0.01 to 0.08%, sulfur (S): 0.01% or less, nitrogen (N): 0.01% or less, soluble aluminum (sol.Al): 0.01 to 0.06%, niobium (Nb): 0.002 to 0.02%, boron (B): 0.001 to 0.004%, excluding 0.001%, a balance of iron (Fe), and unavoidable impurities;
hot rolling the reheated slab to a temperature within a range of 850°C to 1150°C to provide a hot-rolled steel sheet;
cooling the hot-rolled steel sheet at an average cooling rate of 10°C/sec to 70°C/sec and coiling the cooled hot-rolled steel sheet to a temperature within a range of 500°C to 750°C;
cold rolling the coiled hot-rolled steel sheet at a reduction ratio of 70% to 90% to provide a cold-rolled steel sheet;
heating the cold-rolled steel sheet in a furnace atmosphere with a hydrogen concentration of 3% to 30% to a temperature within a range of 750°C to 860°C to be continuously annealed;
cooling the continuously annealed cold-rolled steel sheet; and
providing the cold-rolled steel sheet as a base steel sheet and dipping the cold-rolled steel sheet into a hot-dip zinc-based plating bath to manufacture a zinc-based plated steel sheet,
wherein the cold rolling is performed by sequential reduction using a plurality of rolling rolls and a reduction ratio of an initial rolling roll, among the plurality of rolling rolls, is 20% to 40%,
in the base steel,
$R_B$ of Relational Expression 2 below is 1.2 or more,

$$\text{Relational Expression 2:}$$
$$R_B = R(BH)/R(AI),$$

where R(BH) of Relational Expression 2 denotes a concentration ratio of boron (B) present within 20 nm of a ferrite grain boundary in the base steel sheet in a grain direction during a heat treatment performed on the zinc-based plated steel sheet at a temperature of 170°C for 20 minutes, and
R(AI) of Relational Expression 2 denotes a concentration ratio of boron (B) present within 20 nm of a ferrite grain boundary in the base steel sheet in the grain direction during a heat treatment performed on the zinc-based plated steel sheet at a temperature of 100°C for 60 minutes,
wherein a lower-bake hardening (L-BH) value of the plated steel sheet is 30 MPa or more, and an aging index (AI) of the plated steel sheet is 0.2% or less, measured as defined in the description.

7. The method of claim 6, wherein $C_S$ of Relational Expression 1 below satisfies a range of 0.0002% to 0.002%,

$$\text{Relational Expression 1:}$$
$$C_S = [C]-(12/93)*[Nb]$$

where [C] and [Nb] of Relational Expression 1 refer to contents (wt%) of C and Nb of the base steel sheet, respectively.

8. The method of claim 6 or 7, wherein the annealed cold-rolled steel sheet is primarily cooled to a temperature within a range of 630°C to 670°C at an average cooling rate of 2°C/sec to 10°C/sec, and
the primarily cooled cold-rolled steel sheet is secondarily cooled to a temperature within a range of 440°C to 480°C at an average cooling rate of 3°C/sec to 20°C/sec.

9. The method of claim 6 or 7, wherein the cold-rolled steel sheet is dipped in a hot-dip zinc-based plating bath of 440°C to 480°C.

10. The method of claim 6 or 7, wherein the zinc-based plated steel sheet is temper-rolled at a reduction ratio of 0.3% to 1.6%.

**Patentansprüche**

1. Mit Zink plattiertes Stahlblech mit ausgezeichneter Alterungsbeständigkeit bei Raumtemperatur und Einbrennhärtbarkeit, wobei das mit Zink plattierte Stahlblech Folgendes umfasst:

ein Basisstahlblech und eine auf einer Oberfläche des Basisstahlblechs gebildete mit Zink plattierte Schicht, wobei das Basisstahlblech, in Gewichtsprozent (Gew.-%), Folgendes umfasst: Kohlenstoff (C): 0,005 % oder weniger, ausschließlich 0 %, Mangan (Mn): 0,1 % bis 1,0 %, Silicium (Si): 0,3 % oder weniger, ausschließlich 0 %, Phosphor (P): 0,01 bis 0,08 %, Schwefel (S): 0,01 % oder weniger, Stickstoff (N): 0,01 % oder weniger, lösliches Aluminium (lösl. Al): 0,01 bis 0,06 %, Niob (Nb): 0,002 bis 0,02 %, Bor (B): 0,001 bis 0,004 %, ausschließlich 0,001 %, Rest Eisen (Fe) und unvermeidbare Verunreinigungen, und $R_B$ des nachstehenden relationalen Ausdrucks 2 ist 1,2 oder mehr,

$$\text{Relationaler Ausdruck 2:}$$

$$R_B = R(BH)/R(AI),$$

wobei R(BH) des relationalen Ausdrucks 2 ein
Konzentrationsverhältnis von Bor (B) bezeichnet, das innerhalb von 20 nm einer Ferritkorngrenze in dem Basisstahlblech in einer Kornrichtung während einer Wärmebehandlung vorhanden ist, die an dem mit Zink plattierten Stahlblech bei einer Temperatur von 170 °C für 20 Minuten durchgeführt wird, und
R(AI) des relationalen Ausdrucks 2 ein Konzentrationsverhältnis von Bor (B) bezeichnet, das innerhalb von 20 nm einer Ferritkorngrenze im Basisstahlblech in der Kornrichtung während einer Wärmebehandlung vorhanden ist, die an dem mit Zink plattierten Stahlblech bei einer Temperatur von 100 °C für 60 Minuten durchgeführt wird, wobei ein Wert für die untere Einbrennhärtung (L-BH) des plattierten Stahlblechs 30 MPa oder mehr beträgt und ein Alterungsindex (AI) des plattierten Stahlblechs 0,2 % oder weniger, gemessen gemäß der Beschreibung, beträgt.

2. Mit Zink plattiertes Stahlblech nach Anspruch 1, wobei das Basisstahlblech ein kaltgewalztes Stahlblech ist.

3. Mit Zink plattiertes Stahlblech nach Anspruch 1, wobei ein Mikrogefüge des Basisstahlblechs ein einphasiges Ferritgefüge ist und Körner mit einem durchschnittlichen Durchmesser von 8 μm oder weniger 70 % oder mehr der Körner des einphasigen Ferritgefüges ausmachen, und zwar im Verhältnis einer Fläche zu einem Querschnitt des Stahlblechs.

4. Mit Zink plattiertes Stahlblech nach Anspruch 1, wobei die Streckgrenze des plattierten Stahlblechs 210 MPa oder mehr beträgt und eine Dehnung des plattierten Stahlblechs 35 % oder mehr beträgt, wobei die Streckgrenze und die Dehnung in einer Längsrichtung der Probe gemäß den ASTM-Normen gemessen werden.

5. Mit Zink plattiertes Stahlblech nach Anspruch 1, wobei Cs des nachstehenden relationalen Ausdrucks 1 einem Bereich von 0,0002 % bis 0,002 % entspricht,

$$\text{Relationaler Ausdruck 1:}$$

$$Cs = [C]-(12/93)*[Nb]$$

wobei sich [C] und [Nb] des relationalen Ausdrucks 1 auf den Gehalt (Gew.-%) an C bzw. Nb des Basisstahlblechs beziehen.

6. Verfahren zur Herstellung des mit Zink plattierten Stahlblechs nach Anspruch 1 mit ausgezeichneter Alterungsbeständigkeit bei Raumtemperatur und Einbrennhärtbarkeit, wobei das Verfahren Folgendes umfasst:

Wiedererwärmen einer Bramme auf eine Temperatur innerhalb eines Bereichs von 1160 °C bis 1250 °C, wobei die Bramme, in Gewichtsprozent (Gew.-%), Folgendes umfasst: Kohlenstoff (C): 0,005 % oder weniger, ausschließlich 0 %, Mangan (Mn): 0,1 % bis 1,0 %, Silicium (Si): 0,3 % oder weniger, ausschließlich 0 %, Phosphor (P): 0,01 bis 0,08 %, Schwefel (S): 0,01 % oder weniger, Stickstoff (N): 0,01 % oder weniger, lösliches Aluminium (lösl. Al): 0,01 bis 0,06 %, Niob (Nb): 0,002 bis 0,02 %, Bor (B): 0,001 bis 0,004 %, ausschließlich 0,001 %, Rest Eisen (Fe) und unvermeidbare Verunreinigungen; Warmwalzen der wiedererwärmten Bramme auf eine Temperatur innerhalb eines Bereichs von 850 °C bis 1150 °C, um ein warmgewalztes Stahlblech zu erzeugen; Abkühlen des warmgewalzten Stahlblechs mit einer durchschnittlichen Abkühlungsgeschwindigkeit von 10 °C/s bis 70 °C/s und Aufwickeln des abgekühlten warmgewalzten Stahlblechs auf eine Temperatur innerhalb eines Bereichs von 500 °C bis 750 °C;

Kaltwalzen des aufgewickelten warmgewalzten Stahlblechs mit einem Reduktionsverhältnis von 70 % bis 90 %, um ein kaltgewalztes Stahlblech zu erzeugen;

Erwärmen des kaltgewalzten Stahlblechs in einer Ofenatmosphäre mit einer Wasserstoffkonzentration von 3 % bis 30 % auf eine Temperatur innerhalb eines Bereichs von 750 °C bis 860 °C zum kontinuierlichen Glühen; Abkühlen des kontinuierlich geglühten kaltgewalzten Stahlblechs; und

Bereitstellen des kaltgewalzten Stahlblechs als Basisstahlblech und Eintauchen des kaltgewalzten Stahlblechs in ein Schmelztauchbad für Plattierung mit Zink zur Herstellung eines mit Zink plattierten Stahlblechs, wobei das Kaltwalzen durch sequenzielles Reduzieren unter Verwendung einer Vielzahl von Walzrollen durchgeführt wird und ein Reduktionsverhältnis einer anfänglichen Walzrolle unter der Vielzahl von Walzrollen 20 % bis 40 %

im Basisstahl beträgt,

$R_B$ des nachstehenden relationalen Ausdrucks 2 1,2 oder mehr beträgt,

$$\text{Relationaler Ausdruck 2:}$$

$$R_B = R(BH)/R(AI),$$

wobei R(BH) des relationalen Ausdrucks 2 ein

Konzentrationsverhältnis von Bor (B) bezeichnet, das innerhalb von 20 nm einer Ferritkorngrenze in dem Basisstahlblech in einer Kornrichtung während einer Wärmebehandlung vorhanden ist, die an dem mit Zink plattierten Stahlblech bei einer Temperatur von 170 °C für 20 Minuten durchgeführt wird, und

R(AI) des relationalen Ausdrucks 2 ein Konzentrationsverhältnis von Bor (B) bezeichnet, das innerhalb von 20 nm einer Ferritkorngrenze im Basisstahlblech in der Kornrichtung während einer Wärmebehandlung vorhanden ist, die an dem mit Zink plattierten Stahlblech bei einer Temperatur von 100 °C für 60 Minuten durchgeführt wird, wobei ein Wert für die untere Einbrennhärtung (L-BH) des plattierten Stahlblechs 30 MPa oder mehr beträgt und ein Alterungsindex (AI) des plattierten Stahlblechs 0,2 % oder geringer, gemessen gemäß der Beschreibung, ist.

7. Verfahren nach Anspruch 6, wobei Cs des nachstehenden relationalen Ausdrucks 1 einem Bereich von 0,0002 % bis 0,002 % entspricht,

$$\text{Relationaler Ausdruck 1:}$$

$$Cs = [C] - (12/93)*[Nb]$$

wobei sich [C] und [Nb] des relationalen Ausdrucks 1 auf den Gehalt (Gew.-%) an C bzw. Nb des Basisstahlblechs beziehen.

8. Verfahren nach Anspruch 6 oder 7, wobei das geglühte kaltgewalzte Stahlblech primär auf eine Temperatur innerhalb eines Bereichs von 630 °C bis 670 °C bei einer durchschnittlichen Abkühlungsgeschwindigkeit von 2 °C/s bis 10 °C/s abgekühlt wird und

das primär abgekühlte kaltgewalzte Stahlblech sekundär auf eine Temperatur innerhalb eines Bereichs von 440 °C bis 480 °C bei einer durchschnittlichen Abkühlungsgeschwindigkeit von 3 °C/s bis 20 °C/s abgekühlt wird.

**9.** Verfahren nach Anspruch 6 oder 7, wobei das kaltgewalzte Stahlblech in ein Schmelztauchbad für Plattierung mit Zink mit einer Temperatur von 440 °C bis 480 °C eingetaucht wird.

**10.** Verfahren nach Anspruch 6 oder 7, wobei das mit Zink plattierte Stahlblech mit einem Reduktionsverhältnis von 0,3 % bis 1,6 % tempergewalzt wird.

**Revendications**

**1.** Tôle d'acier revêtue d'un placage à base de zinc ayant une excellente résistance au vieillissement à température ambiante et une excellente aptitude au durcissement par cuisson, la tôle d'acier revêtue d'un placage à base de zinc comprenant :

une tôle d'acier de base et une couche revêtue d'un placage à base de zinc formée sur une surface de la tôle d'acier de base,
dans laquelle la tôle d'acier de base comprend, en pourcentage en poids (% en poids), du carbone (C) : 0,005 % ou moins, à l'exclusion de 0 %, du manganèse (Mn) : 0,1 à 1,0 %, du silicium (Si) : 0,3 % ou moins, à l'exclusion de 0 %, du phosphore (P) : 0,01 à 0,08 %, du soufre (S) : 0,01 % ou moins, de l'azote (N) : 0,01 % ou moins, de l'aluminium soluble (Al sol.) : 0,01 à 0,06 %, du niobium (Nb) : 0,002 à 0,02 %, du bore (B) : 0,001 à 0,004 %, à l'exclusion de 0,001 %, un reste de fer (Fe), et des impuretés inévitables, et
$R_B$ de l'expression relationnelle 2 ci-dessous est de 1,2 ou plus,

$$\text{Expression relationnelle 2 :}$$
$$R_B = R(BH)/R(AI),$$

où R(BH) de l'expression relationnelle 2 désigne un rapport de concentration de bore (B) présent à moins de 20 nm d'un joint de grain de ferrite dans la tôle d'acier de base dans une direction de grain durant un traitement thermique effectué sur la tôle d'acier revêtue d'un placage à base de zinc à une température de 170 °C pendant 20 minutes, et R(AI) de l'expression relationnelle 2 désigne un rapport de concentration de bore (B) présent à moins de 20 nm d'un joint de grain de ferrite dans la tôle d'acier de base dans la direction de grain durant un traitement thermique effectué sur la tôle d'acier revêtue d'un placage à base de zinc à une température de 100 °C pendant 60 minutes, dans laquelle une valeur de durcissement après cuisson inférieur (L-BH) de la tôle d'acier revêtue d'un placage est de 30 MPa ou plus, et un indice de vieillissement (AI) de la tôle d'acier revêtue d'un placage est de 0,2 % ou moins, mesuré comme défini dans la description.

**2.** Tôle d'acier revêtue d'un placage à base de zinc selon la revendication 1, dans laquelle la tôle d'acier de base est une tôle d'acier laminée à froid.

**3.** Tôle d'acier revêtue d'un placage à base de zinc selon la revendication 1, dans laquelle une microstructure de la tôle d'acier de base est une structure monophasée de ferrite, et
des grains ayant un diamètre moyen de 8 $\mu$m ou moins représentent 70 % ou plus des grains de la structure monophasée de ferrite, en tant que rapport entre une aire et une section transversale de la tôle d'acier.

**4.** Tôle d'acier revêtue d'un placage à base de zinc selon la revendication 1, dans laquelle une limite d'élasticité de la tôle d'acier revêtue d'un placage est de 210 MPa ou plus, et un allongement de la tôle d'acier revêtue d'un placage est de 35 % ou plus,
la limite d'élasticité et l'allongement sont mesurés dans le sens de la longueur de l'échantillon selon les normes ASTM.

**5.** Tôle d'acier revêtue d'un placage à base de zinc selon la revendication 1, dans laquelle Cs de l'expression relationnelle 1 ci-dessous satisfait une plage de 0,0002 % à 0,002 %,

$$\text{Expression relationnelle 1 :}$$
$$C_S = [C]-(12/93)*[Nb]$$

où [C] et [Nb] de l'expression relationnelle 1 font référence aux teneurs (% en poids) en C et en Nb de la tôle d'acier de base, respectivement.

**6.** Procédé de fabrication de la tôle d'acier revêtue d'un placage à base de zinc de la revendication 1 ayant une excellente résistance au vieillissement à température ambiante et une excellente aptitude au durcissement par cuisson, le procédé comprenant :

le réchauffage d'une brame jusqu'à une température à l'intérieur d'une plage de 1160 °C à 1250 °C, la brame comprenant, en pourcentage en poids (% en poids), du carbone (C) : 0,005 % ou moins, à l'exclusion de 0 %, du manganèse (Mn) : 0,1 à 1,0 %, du silicium (Si) : 0,3 % ou moins, à l'exclusion de 0 %, du phosphore (P) : 0,01 à 0,08 %, du soufre (S) : 0,01 % ou moins, de l'azote (N) : 0,01 % ou moins, de l'aluminium soluble (Al sol.) : 0,01 à 0,06 %, du niobium (Nb) : 0,002 à 0,02 %, du bore (B) : 0,001 à 0,004 %, à l'exclusion de 0,001 %, un reste de fer (Fe), et des impuretés inévitables ;

le laminage à chaud de la brame réchauffée jusqu'à une température à l'intérieur d'une plage de 850 °C à 1150 °C pour fournir une tôle d'acier laminée à chaud ;

le refroidissement de la tôle d'acier laminée à chaud à une vitesse de refroidissement moyenne de 10 °C/s à 70 °C/s et le bobinage de la tôle d'acier laminée à chaud refroidie jusqu'à une température à l'intérieur d'une plage de 500 °C à 750 °C ;

le laminage à froid de la tôle d'acier laminée à chaud bobinée à un taux de réduction de 70 % à 90 % pour obtenir une tôle d'acier laminée à froid ;

le chauffage de la tôle d'acier laminée à froid dans une atmosphère de four avec une concentration d'hydrogène de 3 % à 30 % jusqu'à une température à l'intérieur d'une plage de 750 °C à 860 °C pour la recuire en continu ;

le refroidissement de la tôle d'acier laminée à froid recuite en continu ; et

la fourniture de la tôle d'acier laminée à froid en tant que tôle d'acier de base et l'immersion de la tôle d'acier laminée à froid dans un bain chaud de placage à base de zinc pour fabriquer une tôle d'acier revêtue d'un placage à base de zinc,

dans lequel le laminage à froid est effectué par réduction séquentielle à l'aide d'une pluralité de cylindres de laminage et un taux de réduction d'un cylindre de laminage initial, parmi la pluralité de cylindres de laminage, est de 20 % à 40 %,

dans l'acier de base,

$R_B$ de l'expression relationnelle 2 ci-dessous est de 1,2 ou plus,

$$\text{Expression relationnelle 2 :}$$
$$R_B = R(BH)/R(AI),$$

où R(BH) de l'expression relationnelle 2 désigne un rapport de concentration de bore (B) présent à moins de 20 nm d'un joint de grain de ferrite dans la tôle d'acier de base dans une direction de grain durant un traitement thermique effectué sur la tôle d'acier revêtue d'un placage à base de zinc à une température de 170 °C pendant 20 minutes, et R(AI) de l'expression relationnelle 2 désigne un rapport de concentration de bore (B) présent à moins de 20 nm d'un joint de grain de ferrite dans la tôle d'acier de base dans la direction de grain durant un traitement thermique effectué sur la tôle d'acier revêtue d'un placage à base de zinc à une température de 100 °C pendant 60 minutes, dans lequel une valeur de durcissement après cuisson inférieur (L-BH) de la tôle d'acier revêtue d'un placage est de 30 MPa ou plus, et un indice de vieillissement (AI) de la tôle d'acier revêtue d'un placage est de 0,2 % ou moins, mesuré comme défini dans la description.

**7.** Procédé selon la revendication 6, dans lequel Cs de l'expression relationnelle 1 ci-dessous satisfait une plage de 0,0002 % à 0,002 %,

$$\text{Expression relationnelle 1 :}$$
$$C_S = [C]-(12/93)*[Nb]$$

où [C] et [Nb] de l'expression relationnelle 1 se réfèrent aux teneurs (% en poids) en C et en Nb de la tôle d'acier de base, respectivement.

**8.** Procédé selon la revendication 6 ou 7, dans lequel la tôle d'acier laminée à froid recuite est refroidie en premier lieu jusqu'à une température à l'intérieur d'une plage de 630 °C à 670 °C à une vitesse de refroidissement moyenne de 2 °C/s à 10 °C/s, et

la tôle d'acier laminée à froid refroidie en premier lieu est refroidie en second lieu jusqu'à une température à l'intérieur d'une plage de 440 °C à 480 °C à une vitesse de refroidissement moyenne de 3 °C/s à 20 °C/s.

9. Procédé selon la revendication 6 ou 7, dans lequel la tôle d'acier laminée à froid est immergée dans un bain chaud de placage à base de zinc de 440 °C à 480 °C.

10. Procédé selon la revendication 6 ou 7, dans lequel la tôle d'acier revêtue d'un placage à base de zinc subit un laminage d'écrouissage à un taux de réduction de 0,3 % à 1,6 %.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020000038789
- JP 2004292891 A
- KR 1020020073564
- JP H0426747 A